# EUROPEAN PATENT APPLICATION

(11) **EP 1 152 612 A2**
(43) Date of publication of application: **07.11.2001**
(21) Application number: 01303528.2
(22) Date of filing: 18.04.2001
(51) Int. Cl.: H04N 5/92

(54) **Multiplex data recording and reproducing apparatus and method for the same**

(30) Priority: 01.05.2000 JP 2000132447
(71) Applicant: MATSUSHITA ELECTRIC INDUSTRIAL CO., LTD., Kadoma-shi, Osaka 571-8501 (JP)
(72) Inventor: Motosugi, Masahiro, Ibaraki-shi, Osaka 567-0031 (JP); Ota, Yutaka, Neyagawa-shi, Osaka 572-0001 (JP)
(74) Representative: Rackham, Stephen Neil

(57) **Abstract**

A multiplexed data recorder and player multiplexes and simultaneously records both analog broadcast and digital broadcast signals. A digital broadcast signal is received (2) and used to generate a first transport stream (TSI) in which packetized data is contained intermittently on the time base. An analog broadcast signal (10) is converted to a digital signal (16) and used to generate a second transport stream (TS2) in which packetized data is contained intermittently on the time base. By interleaving packets from the first (TSI) and second (TS2) transport streams, the first and second transport streams are multiplexed to a single transport stream (TSb). The single multiplexed transport stream (TSb) is then recorded to tape (21) or other recording medium.

## Description

The present invention relates to an apparatus and method for recording and reproducing multiplexed data, and more specifically to an apparatus and method for multiplexing a digital audio-visual signal (AV signal) and an analog AV signal into a single data stream, and recording and reproducing the multiplexed signal.

Once television broadcasters begin transmitting digital AV signals, or more specifically MPEG2-compressed AV signals, analog television broadcasts (analog broadcasting) and digital television broadcasts (digital broadcasting) will co-exist. Analog broadcasts can be recorded by dedicated analog broadcast recorders, and digital broadcasts can be similarly recorded by dedicated digital broadcast recorders.

Different signal formats are used for analog broadcasting and digital broadcasting. This means that a recorder capable of recording analog and digital broadcast signals can conventionally record only one or the other at a single time. That is, only the analog signal can be recorded when recording an analog broadcasting signal, and only the digital signal can be recorded when recording a digital broadcasting signal. If both analog and digital signals are to be recorded they must be recorded sequentially. A method or apparatus for multiplexing the analog signal and the digital signal together for recording at the same time has heretofore not been proposed.

The present invention therefore provides a multiplexed data recording and reproducing apparatus and corresponding method capable of multiplexing analog and digital broadcasting signals so that they can be recorded together at the same time.

To achieve the above object, a multiplexed data recording apparatus according to a first aspect of the invention has a means for receiving a digital signal based on a digital broadcast, and generating a first transport stream containing packetized data intermittently on a time base; means for receiving an analog signal based on an analog broadcast; means for converting the analog signal to a digital signal, and generating a second transport stream containing packetized data intermittently on a time base; a multiplexer for multiplexing the first transport stream and second transport stream to generate a single transport stream; and recording means for recording the single transport stream to a recording medium.

Preferably, the first transport stream is an MPEG-2 transport stream, and the means for generating the second transport stream is an MPEG-2 encoder.

Yet further preferably, the multiplexer has a first register for temporarily storing one or a plurality of packets from the first transport stream; a second register for temporarily storing one or a plurality of packets from the second transport stream; a controller for detecting a time when a packet contained in the first transport stream is received, and controlling a timing when a packet contained in the second transport stream is output from the second register in a time when there is not a packet from the first transport stream; and an adder for interleaving and adding first transport stream packets and second transport stream packets.

Yet further preferably, the recording apparatus also has a PSI overwriter downstream of the multiplexer. The overwriter overwrites the system information packets (PSI) containing system information in the first transport stream.

Yet further preferably, the recording apparatus also has means for extracting a program clock reference value (PCR) contained in the first transport stream; and means for generating a clock and reference time synchronized to the program clock reference. The means for generating the second transport stream is driven according to the clock and reference time.

Yet further preferably, the means for generating the second transport stream adds an identification code to the second transport stream packets.

The present invention also provides a multiplexed data reproducing apparatus for playing back a recording medium to which is recorded a single transport stream having multiplexed therein a first transport stream containing packetized data intermittently on a time base and a second transport stream containing packetized data intermittently on a time base. This reproducing apparatus has reading means for reading said single transport stream from the recording medium; a demultiplexer for extracting and separating from the single transport stream first transport stream packets and second transport stream packets; a first decoder for decoding the first transport stream; a second decoder for decoding the second transport stream; and a selection switch for selecting either first decoder output or second decoder output.

The first decoder is preferably a high functionality decoder, and the second decoder is a normal functionality decoder.

Yet further preferably, the first decoder and second decoder are a single integrated decoder.

The present invention also provides a multiplexed data reproducing apparatus for playing back a recording medium to which is recorded a single transport stream having multiplexed therein a first transport stream containing packetized data intermittently on a time base and a second transport stream containing packetized data intermittently on a time base, the reference clock of the first transport stream and the reference clock of the second transport stream matching. This reproducing apparatus has reading means for reading said single transport stream from the recording medium; and a decoder for time dividing the first transport stream and the second transport stream contained in the single transport stream, and selectively decoding either the first or the second transport stream.

The present invention also provides an integrated multiplexed data recording and reproducing apparatus having: means for receiving a digital signal based on a digital broadcast, and generating a first transport stream containing packetized data intermittently on a time base; means for receiving an analog signal based on an analog broadcast; means for converting the analog signal to a digital signal, and generating a second transport stream containing packetized data intermittently on a time base; a multiplexer for multiplexing the first transport stream and second transport stream to generate a single transport stream; recording means for recording the single transport stream to a recording medium; reading means for reading said single transport stream from the recording medium; a demultiplexer for extracting and separating from the single transport stream first transport stream packets and second transport stream packets; a first decoder for decoding the first transport stream; a second decoder for decoding the second transport stream; and a selection switch for selecting either first decoder output or second decoder output.

The present invention also provides a multiplexed data recording method comprising steps for receiving a digital signal based on a digital broadcast, and generating a first transport stream containing packetized data intermittently on a time base; receiving an analog signal based on an analog broadcast; converting the analog signal to a digital signal, and generating a second transport stream containing packetized data intermittently on a time base; multiplexing the first transport stream and second transport stream to generate a single transport stream; and recording the single transport stream to a recording medium.

The present invention also provides a multiplexed data reproducing method for playing back a recording medium to which is recorded a single transport stream having multiplexed therein a first transport stream containing packetized data intermittently on a time base and a second transport stream containing packetized data intermittently on a time base. This reproducing method has steps for: reading said single transport stream from the recording medium; separating from the single transport stream first transport stream packets and second transport stream packets; decoding the first transport stream; decoding the second transport stream; and selecting either first decoder output or second decoder output.

Particular embodiments in accordance with this invention will now be described with reference to the accompanying drawings; in which:-
Fig. 1 is a block diagram of a multiplexed data recording and reproducing apparatus according to a first preferred embodiment of the present invention;
Fig. 2 is a signal waveform diagram of the blocks shown in Fig. 1; and
Fig. 3 is a block diagram of a multiplexed data recording and reproducing apparatus according to a second preferred embodiment of the present invention.

### Embodiment 1

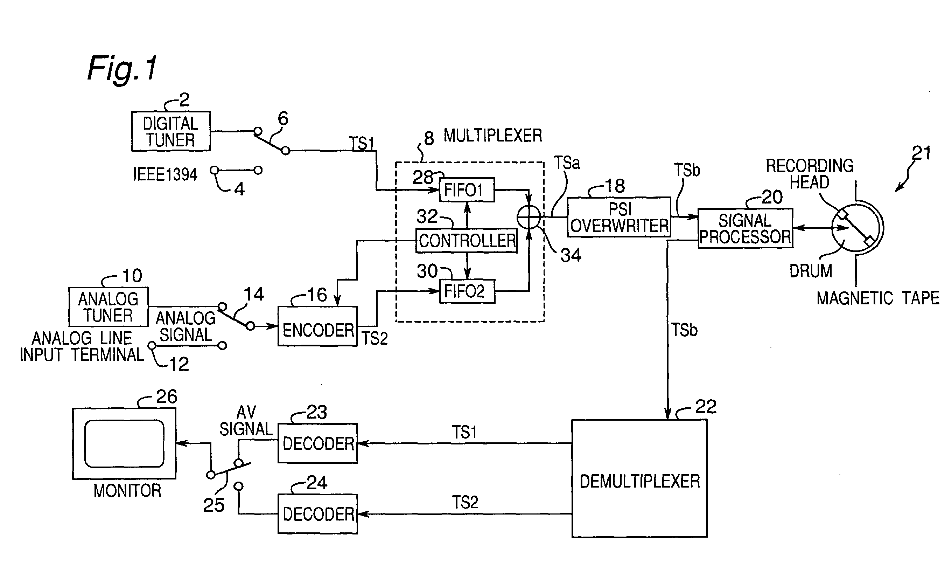

Fig. 1 shows a multiplexed data recording and reproducing apparatus according to a first preferred embodiment of the present invention. Shown in Fig. 1 are digital tuner 2, IEEE 1394 input terminal 4, selector switch 6, multiplexer 8, analog tuner 10, analog line input terminal 12, selector switch 14, and encoder 16. The encoder 16 is an MPEG-2 encoder that converts an analog audio-video signal (AV signal below) to a digital signal, and further generates an MPEG transport stream from the digital signal.

A digital MPEG transport stream is input from either digital tuner 2 or IEEE 1394 input terminal 4. It should be noted that the input terminal 4 is not limited to an IEEE 1394 interface, and could use a USB or other interface.

The transport stream in this exemplary embodiment is an AV signal such as an HDTV AV signal, but could contain text data or program data.

An analog AV signal, which also could contain text data or program data, is input from the analog tuner 10 or analog line input terminal 12 to the encoder 16.

An MPEG-2 encoded digital AV signal, for example, is applied to selector switch 6, and an analog AV signal, for example, is applied to selector switch 14.

Furthermore, the signal from selector switch 6 is transport stream TS1, and the signal from encoder 16 is transport stream TS2.

Also shown in Fig. 1 are PSI overwriter 18, signal processor 20, head 21, demultiplexer 22, decoders 23 and 24, selector switch 25, and monitor 26.

It will be noted that parts 2 to 21 shown in Fig. 1 comprise the recording section, and parts 20 to 26 comprise the reproducing section, of this exemplary recording and reproducing apparatus.

As shown in Fig. 1, the multiplexer 8 comprises a first-in first-out (FIFO1) register 28, first-in first-out (FIFO2) register 30, controller 32, and adder 34.

Our invention multiplexes a digital signal, such as a digital AV signal, and an analog signal, such as an analog AV signal, to generate one stream, and then records this single multiplexed signal stream to a storage medium. The storage medium is described as a tape in this exemplary embodiment of the invention, but can obviously be an optical disk, magnetic disk, memory card, or other storage medium.

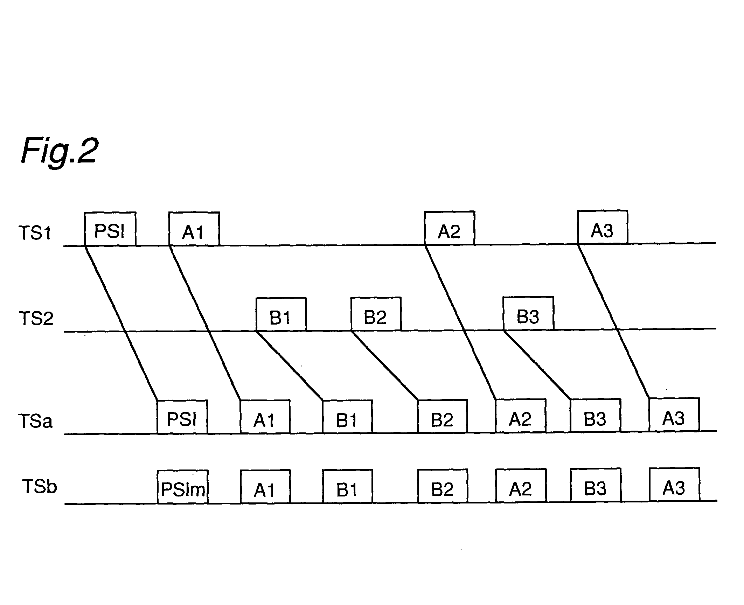

The operation of a multiplexed data recording and reproducing apparatus according to the present invention is described next below with reference to Fig. 2.

Transport stream TS1 is a data stream packetized in 188 byte data blocks, for example, as shown in Fig. 2. The packets transmitted from the broadcasting station include system information packet PSI, and packets A1, A2, and A3 containing AV signal information. The packets are transmitted with gaps therebetween, that is, intermittently, on the time base. Transport stream TS1 is sent to register 28.

Transport stream TS2 is an analog AV signal, for example, digitized as shown in Fig. 2 by encoder 16 and then packetized according to the MPEG-2 format. The packets include packets B1, B2, B3 containing AV signal information generated intermittently on the time base, and are input to register 30.

It should be noted that the system information is later overwritten by the PSI overwriter 18 and the encoder 16 of this exemplary embodiment therefore does not generate system information packets, but it could be built to also generate the system information packets.

Registers 28 and 30 have sufficient capacity to store one or a plurality of packets.

The controller 32 controls the timing at which the encoder 16 generates packets B1, B2, B3. More specifically, controller 32 detects the interval between packets PSI, A1, A2, A3 in transport stream TS1, and controls the output of encoder 16 so that packets B1, B2, B3 of transport stream TS2 are interleaved to these intervals. Packets PSI, A1, A2, A3 in transport stream TS1 are transmitted from the broadcasting station, and while the packet intervals are therefore not necessarily equal, the intervals are fixed.

The controller 32 also controls the output timing of the packets PSI, A1, A2, A3 stored temporarily to register 28, and the output timing of the packets B1, B2, B3 stored temporarily to register 30, so that the output of packets PSI, A1, A2, A3 does not overlap (conflict) on the time base with the output of packets B1, B2, B3. Adder 34 adds packets PSI, A1, A2, A3 with packets B1, B2, B3 so that they form a single stream, producing the multiplexed transport stream TSa shown in Fig. 2.

The adder 34 outputs the multiplexed transport stream TSa to PSI overwriter 18, which overwrites the system information packet PSI with system information packet PSIm and outputs multiplexed transport stream TSb. The system information packet PSI transmitted from the broadcasting station contains system information for only transport stream TS1. It must therefore be overwritten with system information packet PSIm relating to both transport stream TS1 and transport stream TS2. The information that overwrites the original system information packet PSI is information defined by the MPEG-2 standard, such as PAT or PMT. By thus overwriting the system information packet PSI, the multiplexed transport stream TSb can be decoded by a general purpose MPEG-2 decoder.

The multiplexed transport stream TSb is sent to signal processor 20, which then records the stream to magnetic tape by way of the recording head.

The operation of the multiplexed data reproducing section according to the present invention is described next below.

Transport stream TSb, which is read from the magnetic tape by the head and processed by signal processor 20, is input to demultiplexer 22. The demultiplexer 22 then separates transport streams TS1 and TS2. It must be possible to discriminate packets B1, B2, B3 from packets PSI, A1, A2, A3 in order to separate transport streams TS1 and TS2. This can be accomplished by adding an identification code (ID code) to one of the groups of packets, that is, either to packets PSI, A1, A2, A3 or to packets B1, B2, B3. We assume for explanatory purposes below that this ID code is added to the group of packets B1, B2, B3. This ID code can be added by the encoder 16 to the header of each packet. The packets can also be discriminated by detecting unique data written to packets PSI, A1, A2, A3 by the broadcaster before signal transmission. Whatever identification (discrimination) method is used, the demultiplexer 22 thus detects the ID code and separates the packets of transport stream TS1 from the packets of transport stream TS2.

Transport stream TS1 is then input to a high functionality decoder 23, and transport stream TS2 is input to a normal decoder 24. The high functionality decoder 23 has the advanced functionality needed to decode an HDTV AV signal while the normal decoder 24 has the normal functions required to decode a normal non-HDTV television signal. The output of decoders 23 and 24 is then passed to selector switch 25, the output of which is connected to the monitor. The user selects digital or analog signal output, and the monitor displays the output from the corresponding decoder.

It should be noted that decoders 23 and 24 can be integrated to a single device such that decoder function is selected with a switch.

Further alternatively, decoder 23 can be omitted and just an external connection terminal provided. In this case the transport stream TS1 is sent to an external HDTV decoder and the decoded signal is received at the external communication terminal by an IEEE 1394 communications function and passed to the selector switch 25.

It will be obvious to one with ordinary skill in the related art that while the embodiment described above multiplexes only two transport streams, it is also possible to multiplex three or more transport streams.

As described above, a multiplexed data recorder according to the present invention packetizes and interleaves to a single stream both digital AV data and analog AV data, thus enabling both digital and analog AV data to be recorded as a single stream. This makes it possible to simultaneously record to plural channels both digital broadcasts and analog broadcasts. As a result, magnetic tape, for example, can be used more efficiently.

In addition, it is possible to parallel record an analog broadcasting program while recording a digital broadcasting program, and vice versa.

Furthermore, a multiplexed data player according to the present invention can restore the multiplexed transport stream to the plural original transport streams TS1 and TS2, and provide decoders appropriate to the content of each transport stream.

### Embodiment 2

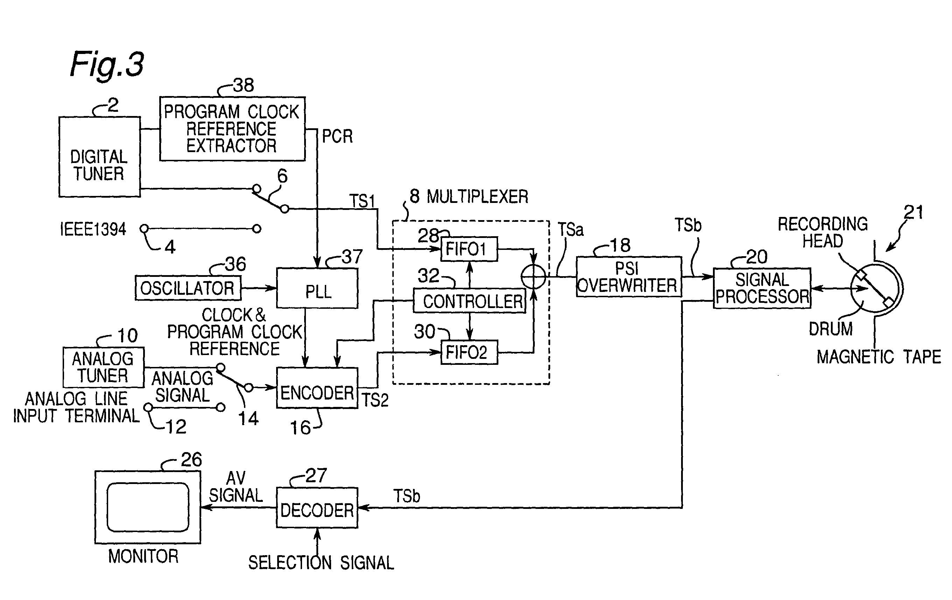

Fig. 3 is a block diagram of a multiplexed data recording and reproducing apparatus according to a second preferred embodiment of the present invention. How this second exemplary multiplexed data recording and reproducing apparatus differs from that of the above first embodiment is described next below.

The multiplexed data recorder shown in Fig. 3 differs from that shown in Fig. 1 in additionally comprising a program clock reference extractor 38, phased-lock loop (PLL) 37, and oscillator 36.

The program clock reference extractor 38 extracts the program clock reference (clock PCR) contained in the transport stream TS1 received from the broadcasting station. The extracted clock reference is passed to the PLL 37, and the oscillator 36 outputs a clock signal and reference clock signal synchronized to the reference clock transmitted from the broadcasting station. The clock signal and reference clock signal from the PLL 37 are applied to the encoder 16, and the packets B1, B2, B3 generated by the encoder 16 are output synchronized to the packets PSI, A1, A2, A3 sent from the broadcasting station.

The multiplexed data player shown in Fig. 3 also differs from the one shown in Fig. 1 in that there are only decoder 27 and monitor 26 downstream from the signal processor 20. This decoder 27 provides both the high decoder functionality and normal decoder functionality noted above, and a switching function for selecting packets PSI, A1, A2, A3 or packets B1, B2, B3. Packets PSI, A1, A2, A3 and packets B1, B2, B3 are interleaved in the reproduced multiplexed transport stream TSb, but all packets are placed synchronized to a clock on the same time base. A common clock is thus used for decoding packets PSI, A1, A2, A3, and for decoding packets B1, B2, B3, and a single decoder 27 can decode both packet streams using a common drive clock.

The packets PSI, A1, A2, A3 transmitted from a broadcasting station can be decoded by enabling (making active) a function for decoding the packets at the timing set by the broadcaster. Packets B1, B2, B3 can be decoded by making a function for decoding at the timing encoded by the encoder 16 active.

It is also possible to separate packets PSI, A1, A2, A3 and packets B1, B2, B3 using an ID code as described above. In this case whether packets PSI, A1, A2, A3 or packets B1, B2, B3 are decoded is determined by a user selection signal.

This second embodiment of the invention as shown in Fig. 3 matches the reference clock of packet A1 in transport stream TS1 and packet B1 in transport stream TS2 in the reproduced signal. The reproduced image will therefore change immediately if, for example, the user changes to transport stream TS2 while transport stream TS1 is being decoded. If the reference clocks of TS1 and TS2 do not match, the reproduced image will be not be presented until the clock is adjusted to the new transport stream, that is, until the PLL adjusts to the selected transport stream, when the selected transport stream changes.

Furthermore, if packets PSI, A1, A2, A3 are HDTV packets and packets B1, B2, B3 are not, the function (operation) of the decoder 27 can also be switched using a selection signal.

The multiplexed data player in this second embodiment shown in Fig. 3 can also be replaced with the player shown in Fig. 1.

As described above, a multiplexed data recording and reproducing apparatus and method according to the present invention can multiplex AV signals from a digital broadcast and AV signals from an analog broadcast for recording efficiently to a storage medium. Furthermore, a recording apparatus according to the present invention provides the functions of both a digital broadcast recorder and an analog broadcast recorder, and can simultaneously record both digital and analog broadcasts to the same medium.

## Claims

1. A multiplexed data recording apparatus comprising:
means (6) for receiving a digital signal based on a digital broadcast, and generating a first transport stream containing packetized data intermittently on a time base;
means (14) for receiving an analog signal based on an analog broadcast;
means (16) for converting the analog signal to a digital signal, and generating a second transport stream containing packetized data intermittently on a time base;
a multiplexer (8) for multiplexing the first transport stream and second transport stream to generate a single transport stream; and
recording means (21) for recording the single transport stream to a recording medium.

2. A recording apparatus as described in claim 1, wherein the first transport stream is an MPEG-2 transport stream, and/or wherein the means (16) for generating the second transport stream is an MPEG-2 encoder.

3. A recording apparatus as described in claim 1 or 2, wherein the multiplexer comprises:
a first register (28) for temporarily storing one or a plurality of packets from the first transport stream;
a second register (30) for temporarily storing one or a plurality of packets from the second transport stream;
a controller (32) for detecting a time when a packet contained in the first transport stream is received, and controlling a timing when a packet contained in the second transport stream is output from the second register in a time when there is not a packet from the first transport stream; and
an adder (34) for interleaving and adding first transport stream packets and second transport stream packets.

4. A recording apparatus as described in claim 1,2 or 3 further comprising a PSI overwriter (18) after the multi-plexer, said overwriter overwriting a packet (PSI) containing system information in the first transport stream.

5. A recording apparatus as described in any preceding claim, further comprising:
means (38) for extracting a program clock reference value (PCR) contained in the first transport stream; and
means (37) for generating a clock and reference time synchronized to the program clock reference;
the means for generating the second transport stream being driven according to said clock and reference time.

6. A recording apparatus as described in any preceding claim, wherein the means for generating the second transport stream adds an identification code to the second transport stream packets.

7. A multiplexed data reproducing apparatus for playing back a recording medium to which is recorded a single transport stream having multiplexed therein a first transport stream containing packetized data intermittently on a time base and a second transport stream containing packetized data intermittently on a time base, said reproducing apparatus comprising:
reading means (21) for reading said single transport stream from the recording medium;
a demultiplexer (22) for extracting and separating from the single transport stream first transport stream packets and second transport stream packets;
a first decoder (23) for decoding the first transport stream;
a second decoder (24) for decoding the second transport stream; and
a selection switch (25) for selecting either first decoder output or second decoder output.

8. A reproducing apparatus as described in claim 7, wherein the first decoder is a high functionality decoder, and the second decoder is a normal functionality decoder; or wherein the first decoder and second decoder are a single integrated decoder.

9. A multiplexed data reproducing apparatus for playing back a recording medium to which is recorded a single transport stream having multiplexed therein a first transport stream containing packetized data intermittently on a time base and a second transport stream containing packetized data intermittently on a time base, the reference clock of the first transport stream and the reference clock of the second transport stream matching, said reproducing apparatus comprising:
reading means (21) for reading said single transport stream from the recording medium; and
a decoder (27) for time dividing the first transport stream and the second transport stream contained in the single transport stream, and selectively decoding either the first or the second transport stream.

10. A multiplexed data recording and reproducing apparatus, comprising:
means (6) for receiving a digital signal based on a digital broadcast, and generating a first transport stream containing packetized data intermittently on a time base;
means (14) for receiving an analog signal based on an analog broadcast;
means (16) for converting the analog signal to a digital signal, and generating a second transport stream containing packetized data intermittently on a time base;
a multiplexer (8) for multiplexing the first transport stream and second transport stream to generate a single transport stream;
recording means (21) for recording the single transport stream to a recording medium;
reading means (21) for reading said single transport stream from the recording medium;
a demultiplexer (22) for extracting and separating from the single transport stream first transport stream packets and second transport stream packets;
a first decoder (23) for decoding the first transport stream;
a second decoder (24) for decoding the second transport stream; and
a selection switch (25) for selecting either first decoder output or second decoder output.

11. A multiplex data recording method, comprising:
receiving a digital signal based on a digital broadcast, and generating a first transport stream containing packetized data intermittently on a time base;
receiving an analog signal based on an analog broadcast;
converting the analog signal to a digital signal, and generating a second transport stream containing packetized data intermittently on a time base;
multiplexing the first transport stream and second transport stream to generate a single transport stream; and
recording the single transport stream to a recording medium.

12. A multiplexed data reproducing method for playing back a recording medium to which is recorded a single transport stream having multiplexed therein a first transport stream containing packetized data intermittently on a time base and a second transport stream containing packetized data intermittently on a time base, said reproducing method comprising:
reading said single transport stream from the recording medium;
separating from the single transport stream first transport stream packets and second transport stream packets;
decoding the first transport stream;
decoding the second transport stream; and
selecting either first decoder output or second decoder output.
